# EUROPEAN PATENT APPLICATION

(11) **EP 3 332 644 A1**
(43) Date of publication of application: **13.06.2018**
(21) Application number: 17446501.3
(22) Date of filing: 05.12.2017
(51) Int. Cl.: A01N 37/44, A01N 47/44, A01P 21/00

(54) **USE OF GROWTH ENHANCING COMPOSITIONS COMPRISING AT LEAST ONE BASIC L-AMINO ACID**

(30) Priority: 06.12.2016 SE 1651599
(71) Applicant: Arevo AB, 904 03 Umeå (SE)
(72) Inventor: Näsholm, Torgny, 905 96 Umeå (SE); Love, Jonathan, 903 63 Umeå (SE)
(74) Representative: Brann AB

(57) **Abstract**

The present invention relates to the use of a composition comprising at least one basic L-amino acid as a dual effect growth additive, which dual effect comprises at least one growth-enhancing element and at least one water use efficiency (WUE) increasing element.

The invention also relates to a method of manufacturing a composition, which method comprises preparing at least one basic L-amino acid into a liquid or solid fertilizer composition, optionally by mixture with further plant nutrients and/or other materials such as solvents, to produce a dual effect growth additive; wherein the additive so produced comprises growth-enhancing element(s) as well as water use efficiency (WUE)-increasing element(s), and wherein no nitrate or nitrate-containing compounds are added or formed during the manufacture thereof.

## Description

### Technical Field

The present invention relates to the area of plant fertilization, and more specifically to a composition which is capable of enhancing growth as well as improving the water use efficiency of a plant. The invention also embraces a method for manufacturing such a composition, as well as its use in the culture of fertilized plants while reducing requirements of watering.

### Background

The term water use efficiency (WUE) has been defined in various ways in the literature, but is commonly known as a simple measure for the water productivity of a plant. An increase in water use efficiency is commonly cited as a response mechanism of plants to moderate to severe soil water deficits, and has been the focus of many programs that seek to increase crop tolerance of drought.

Specific plants have been genetically modified to better withstand drought and/or to improve their water use efficiency. For example, US 2016/0,272,990 (Monsanto) describes a plant cell having a recombinant DNA construct which provides for an enhanced trait as compared to control plants. The said enhanced trait may e.g. be enhanced water use efficiency, enhanced cold tolerance, increased yield, enhanced nitrogen use efficiency, enhanced seed protein, or enhanced seed oil.

With regard to the nitrogen use of plants, its efficiency has been (and is) an area of interest to many industries, including the agriculture and forest industry. Various fertilizer compositions have been proposed in order not only to stimulate the growth of the plant, often by providing a slow release of nutrient(s), but also at the same time avoiding any excessive leakage to the environment, which would reduce the economy and have negative impact on nature in terms of eutrophication.

US 7,776,124 (Binder et al) proposed a fertilizer composition comprising one or more nitrogen-containing organic compounds. The organic compound(s) may be selected from soy powder, dry or liquid lysine, a threonine by-product, or combinations thereof. The fertilizer is proposed to be applied to soil in amounts that promotes plant growth, promotes the growth of beneficial microbes and/or replenishes various nutrients that may have been depleted from the soil, e.g. as the result of repeated planting cycles.

More recently, WO 01/87804 (Näsholm et al) suggested a nitrogen-containing fertilizer for plant growth, which comprises a basic amino acid or a salt thereof in a concentration range of 1-30 mM. According to WO 01/87804, the fertilizer described remains stationary and immobile once added to a clump of growth substrate, and disappears in the manner intended i.e. by the roots of the plant taking up the fertilizer and its nitrogen content. Thus, the leakage from the proposed composition is extremely small, and consequently excessively large amounts of nutrients need not be applied for a desired growth of a plant.

With the global climate changes including larger dry areas around the world, a renewed interest has been taken in the water use efficiency (WUE) of cultured plants. Ideally, a successful fertilizer composition should not only make essential nutrients such as nitrogen available to the growing plants, but also provide for optimized humidity conditions or properties to assist the plant in withstanding longer periods of dry weather without watering, or with a reduced water need.

### Summary of the Invention

One object of the present invention is to provide a reduction of the transpiration and/or the need of water of plants while at the same time provide an efficient fertilizing effect.

This may be achieved by the use of a composition comprising at least one basic L-amino acid as a dual effect growth additive, which dual effect comprises at least one growth-enhancing element and at least one water use efficiency (WUE) increasing element.

Another object of the invention is to provide for the manufacture of a composition which reduces the transpiration and/or increase the water use efficiency (WUE) of plants.
This may be achieved by a method comprising preparing at least one basic L-amino acid into a liquid or solid fertilizer composition, optionally by mixture with further plant nutrients and/or other materials such as solvents, to produce a dual effect growth additive, wherein the additive so produced comprises growth-enhancing element(s) as well as water use efficiency (WUE) increasing element(s), and wherein no nitrate or nitrate-containing compounds are added during the manufacture thereof.

A further object of the invention relates to products and methods for enabling efficient culture of plants with a minimal need for watering the plants.
This may be achieved by the use of at least one basic L-amino acid to enhance the growth of a plant while at the same time increase its water use efficiency (WUE), wherein a liquid or solid composition comprising said amino acid(s) and no nitrate is supplied to a cultured plant.

Further embodiments and advantages of the present invention will appear from the dependent claims as well as from the detailed description that follows.

### Definitions

As opposed to a double effect, the term "dual effect" as used herein means a composite two different mechanisms or results achieved. Thus, a "dual effect" growth additive will include two different ways of directly or indirectly impacting the growth of a cultured plant. A "dual effect" growth additive could also be denoted a composite growth additive.
The term "plant" is used herein broadly, and includes any growth stage such as seedlings.
The term "growth additive" as used herein refers herein in its broadest sense to a material which is added to a plant in order to enhance its growth.

### Detailed description of the Invention

The present invention relates to products, uses and methods for reducing the need of water and/or transpiration of plants while at the same time an efficient fertilizing effect is also obtained. Thus, the invention may advantageously be used on soils where the access to water is limited, and irrigation of fields, lawns or other areas of culture may become difficult and/or expensive.

More specifically, the invention relates to the use of a composition comprising at least one basic L-amino acid as a dual effect growth additive, which dual effect comprises at least one growth-enhancing element and at least one water use efficiency (WUE) increasing element. In this context, it is to be understood that the term "element" is used simply to denote a part or a portion of the effect observed in the plant after having received a dose of the additive according to the invention. Further, a 'dual effect growth additive' should be understood to mean a composition providing more than one effect when added to a cultured plant, i.e. a composite effect. Thus, it is not merely a fertilizer, but a fertilizer which also reduces transpiration and/or the water requirements of the cultured plant. The additive according to the invention is sometimes denoted a 'composition' below, as will appear from the context.

Thus, the present invention uses a nitrogen-containing fertilizer for increasing the water use efficiency (WUE) of the fertilized plant. The nitrogen content may include at least one basic L-amino acid in an amount of at least 50%, or at least 75% such as at least 90%. The at least one basic L-amino acid may be the sole nitrogen source present in the fertilizer. The nitrogen-containing fertilizer may be in a form which includes no added nitrate.

The basic L-amino acid used according to the invention may be L-arginine or L-lysine.

As the person skilled in this area will appreciate, a basic L-amino acid can easily be prepared into any physical format suitable for the herein intended use. Thus, the composition used according to the invention may be a liquid or a solid composition, such as beads or granules. The skilled person will also be able to choose any one or more conventionally used plant nutrients to include into the composition as additional growth-enhancing agents. Thus, one or more agents selected from the group consisting of K, P, Mg, S, Ca, B, Mn, Cl, Fe, Cu, Zn, Na, Ni and Mo may also be included in the composition and used according to the invention. Other conventionally used components such as solvents may also be added to a composition according to the invention.

Further, the present invention relates to a method of manufacturing a composition, which method comprises preparing at least one basic L-amino acid into a liquid or solid fertilizer composition, optionally by mixture with further nutrients and/or other materials such as solvents, to produce a dual effect growth additive; wherein the additive so produced comprises growth-enhancing element(s) as well as water use efficiency (WUE) increasing element(s), and wherein no nitrate or nitrate-containing compounds are added during the manufacture thereof.

As will appear from the experimental part below, it was unexpectedly shown by the present inventors that the nitrate form of nitrogen when supplied to plants as fertilizers in addition to enhancing the growth also stimulated the transpiration i.e. water loss of the fertilized plants. Thus, a composition according to the invention, which comprises at least one basic L-amino acid and no added nitrate, has been shown to provide a combined effect of enhancing the growth such as root and foliage of a plant while at the same time increase or enhance the fertilized plant's water use efficiency. Consequently, a composition which comprises at least one basic L-amino as the only nitrogen source, as well as a composition manufactured according to the invention, will provide two different effects and is consequently sometimes denoted a "dual effect growth additive" herein.

As the skilled person will appreciate, chemical reactions will take place after adding a basic L-amino acid to the soil surrounding a plant, or to the plant as such. Consequently, smaller amounts of nitrate may be formed after supplying the present dual effect growth additive to a plant, or to its close surroundings. However, the dual effect growth additive according to the invention will have been prepared without any addition of nitrate, such as by the below-described method.

As the skilled person will also appreciate, various microbes will commonly be present in the soil wherein plants are cultured. One of the many effects of such microbes will be to break down molecules added such as amino acids. Thus, a certain degree of microbial nitrification may also take place after adding a composition according to the invention to a cultured plant. In one embodiment, the present invention includes measures that would reduce such nitrification.

In addition, the present invention may include taking measures during the manufacture of the composition to prevent subsequent nitrate formation during the manufacture and/or storage of the composition, or at least to reduce such formation substantially. Thus, the invention may include the addition of e.g. one or more arginase, urease and/or nitrification inhibitors.

The present invention may be regarded as a composition comprising at least one growth and water use efficiency (WUE) increasing agent, optionally combined with one or more plant nutrients, wherein the growth and water use efficiency (WUE) increasing agent is at least one basic L-amino acid, said composition comprising no nitrate. The discussion above will be applicable here as well with regard to minor amounts of nitrate.

In one embodiment, the composition used according to the invention comprises arginine as the sole source of nitrogen. Thus, the composition used according to the invention comprises no nitrate. The skilled person will be able to prepare such a composition including suitable amounts of arginine based on parameters commonly used in the field of fertilizer manufacture.

In summary, the invention relates to the use of at least one basic L-amino acid to enhance the growth of a plant while at the same time increasing its water use efficiency (WUE), wherein a liquid or solid composition comprising said amino acid(s) is supplied to a cultured plant. The composition may comprise at least one basic amino acid as the only nitrogen source. The basic amino acid may be L-arginine or L-lysine.

### EXPERIMENTAL PART

The present examples are provided for illustrative purposes only, and should not be construed as limiting the invention as defined by the appended claims. All references presented below or elsewhere in the present application are hereby incorporated herein by reference.

### Materials and methods

1 year old bare root *Pinus radiata* tree clones propagated vegetatively from cuttings were transplanted to 4 L pots containing unfertilized potting mix at pH 5.5-6.0 (15% bark, 50% pine fines, 15% cocoa fibre, 20% pumice) and grown under well-watered irrigated conditions in a greenhouse without temperature control and in natural light. In order to overcome transplant shock and to harmonise the plant material, trees were grown for a further 7 months with fortnightly applications of nitrogen-free Ingestad solution pH 5.5 (Ingestad, T., 1979. Mineral Nutrient Requirements of Pinus silvestrius and Picea abies Seedlings. Physiologia Plantarum 45, 375-380). Additional nutrients were provided at the following concentrations: 4.58 mM K, 3.76 mM P, 3.68 mM Mg, 2.52 mM S, 2.24 mM Ca, 0.17 mM B, 0.07 mM Mn, 8.62 M Cl, 4.31 M Fe, 4.31 M Cu, 3.99 M Zn, 1.37 M Na, 0.87 M Ni and 0.68 M Mo.

For a period of 6-months equimolar (0.1 M) levels of nitrogen were then supplied fortnightly as either L-arginine or ammonium nitrate at a rate equivalent to an estimate of 2% of total tree biomass. At the conclusion of this treatment period, nitrogen content of needles was determined using standard methods in this area to be about 1.12 % for both L-arginine and ammonium nitrate treated trees.

Instantaneous water use efficiency was estimated from gas exchange rates of water and carbon dioxide from intact needles using a commercially available LI-COR portable photosynthesis system.

Carbon Isotope discrimination was determined by mass spectrometry, following standard protocols.

### Example 1: Instantaneous Water Use Efficiency

Gas exchange and Instantaneous Water Use Efficiency of *Pinus radiata* seedlings were grown on either arginine or ammonium nitrate as nitrogen sources, as described above. The data is presented in Table 1 below, and represents mean ± standard deviation, n = 15.

**Table 1**

| Treatment | Transpiration (mmol H₂O m⁻² s⁻¹) | Stomatal conductance (mol H₂O m⁻² s⁻¹) | Photosynthesis (µmοl CO₂ m⁻² s⁻¹) | Instantaneous Water Use Efficiency (µmol CO₂ mmol⁻¹ H₂O) |
|---|---|---|---|---|
| Arginine | 1.27 ± 0.24 | 0.07 ± 0.02 | 4.65 ± 0.61 | 3.72 ± 0.64 |
| Ammonium Nitrate | 1.51 ± 0.24 | 0.09 ± 0.02 | 4.28 ± 0.32 | 2.88 ± 0.39 |

### Example 2: Whole Plant Water Use Efficiency

In Table 2 below, delta ¹³C, growth and the ratio delta ¹³C: growth is presented for *Pinus radiata* seedlings grown on either arginine or ammonium nitrate as nitrogen sources, as described above. Data represents mean ± standard deviation.

**Table 2**

| Treatment | Delta ¹³C (‰) | Biomass |
|---|---|---|
| Arginine | 22.97 ± 0.5 | 74.25 ± 6.39 |
| Ammonium Nitrate | 23.98 ± 0.35 | 58.75 ± 9.32 |

## Claims

1. Use of a composition comprising at least one basic L-amino acid as a dual effect growth additive, which dual effect comprises at least one growth-enhancing element and at least one water use efficiency (WUE) increasing element.

2. Use according to claim 1, wherein the basic L-amino acid is L-arginine or L-lysine.

3. Use according to claim 1 or 2, wherein the composition does not comprise nitrate.

4. Use according to any one of the preceding claims, wherein the composition is a liquid or a solid composition.

5. Use according to any one of the preceding claims, wherein the composition comprises one or more additional growth-enhancing agents.

6. A method of manufacturing a composition, which method comprises preparing at least one basic L-amino acid into a liquid or solid fertilizer composition, optionally by mixture with further plant nutrients and/or other materials such as solvents, to produce a dual effect growth additive;
wherein the additive so produced comprises growth-enhancing element(s) as well as water use efficiency (WUE)-increasing element(s),
and wherein no nitrate or nitrate-containing compounds are added during the manufacture thereof.

7. A method according to claim 6, wherein additional measures are taken to prevent nitrate(s) from forming during the manufacture and/or storage of the composition.
